# EUROPÄISCHE PATENTSCHRIFT

(11) **EP 2 216 555 B1**
(45) Veröffentlichungstag und Bekanntmachung des Hinweises auf die Patenterteilung: **23.07.2014**
(21) Anmeldenummer: 09001715.3
(22) Anmeldetag: 06.02.2009
(51) Int. Cl.: F16B 19/10

(54) **Spanneinrichtung**
Tensioning device
Dispositif de serrage

(43) Veröffentlichungstag der Anmeldung: 11.08.2010
(73) Patentinhaber: Fairchild Fasteners Europe - Camloc GmbH, 65779 Kelkheim (Taunus) (DE)
(72) Erfinder: Scheinberger, Marcus, 65719 Hofheim-Langenhain (DE)
(74) Vertreter: Keil & Schaafhausen Patent- und Rechtsanwälte

(56) Entgegenhaltungen:
- EP-A- 1 889 688
- WO-A-02/33273

## Beschreibung

Die Erfindung betrifft eine Spanneinrichtung insbesondere für eine Befestigungsanordnung sowie ein Verfahren zum Festklemmen plattenförmiger Bauteile unter Verwendung einer Spanneinrichtung und eines Adapters.

Befestigungsanordnungen zum Festklemmen plattenförmiger Bauteile sind meist versehen mit wenigstens einer plastisch verformbaren Einweghülse, die einen definiert geschwächten Bereich zur Einleitung einer wulstartigen Verformung bei einer Druckbelastung dieses Bereichs aufweist, wenigstens einer Spanneinrichtung, die eine mit der Einweghülse verbindbare Zugspindel und eine relativ zu dieser bewegbare Druckhülse zum Abstützen der Einweghülse aufweist, und mit Betätigungsmitteln zum Bewirken einer axialen Relativbewegung zwischen der Druckhülse und der Zugspindel in einem ersten Betätigungsschritt der Befestigungsanordnung und einer gemeinsamen axialen Bewegung der Druckhülse und der Zugspindel in einem nachfolgenden zweiten Betätigungsschritt der Befestigungsanordnung.

Eine solche Befestigungsanordnung ist aus der EP 1 889 688 A1 bekannt. In das Spannelement der dort beschriebenen Befestigungsanordnung ist eine Mechanik integriert, die bewirkt, dass eine Druckhülse während einer ersten Phase der Verschiebungsbewegung der Zugspindel zur Verformung der plastisch verformbaren Hülse zumindest im Wesentlichen ortsfest in der Spanneinrichtung gehalten ist und sich in der zweiten Phase der Verschiebungsbewegung der Zugspindel zum Festklemmen der zu verbindenden Bauteile gemeinsam mit der Zugspindel relativ zu einem Gehäuse der Spanneinrichtung bewegt. Diese Mechanik umfasst mehrere Kugeln, die auf entsprechend gestalteten Führungsflächen bewegt werden, um eine Relativbewegung zwischen der Druckhülse und der Zugspindel zu bewirken. Darüber hinaus ist in der Spanneinrichtung eine Ratsche vorgesehen, die das Ablösen der Hülse von der übrigen Befestigungsanordnung nach dem Gebrauch erleichtert. Die gesamte Spanneinrichtung ist derart ausgebildet, dass sämtliche zur Betätigung erforderlichen Werkzeuge unmittelbar an dem Gehäuse beziehungsweise dem Mutterelement der Spanneinrichtung angreifen. Dies bewirkt, dass die Spanneinrichtung, die teilweise über Kopf montiert wird, aufwendig gestaltet ist und zudem vergleichsweise groß und schwer ist.

Aus der WO 02/33273 A ist zur Befestigung mehrerer Platten bekannt, einen Hohlniet mittels eines Gewindebolzens und eines Mutterelements aus einer Hülse zu erzeugen. Zum Festklemmen der Platten wird die den Gewindebolzen umgebende Hülse so gestaucht, dass ein Wulst ausgebildet wird. Dazu wird ein Innensechskantabschnitt des Gewindebolzens durch ein Werkzeug verdrehfest gehalten, während gleichzeitig das Mutterelement relativ zu dem Gewindebolzen gedreht wird. Es werden folglich zwei separate Drehwerkzeuge zum Festklemmen benötigt.

Aufgabe der vorliegenden Erfindung ist es demgegenüber, eine Spanneinrichtung der eingangs genannten Art bereitzustellen, welche kompakter und leichter ist und damit benutzerfreundlicher handhabbar ist.

Diese Aufgabe wird mit einer Spanneinrichtung nach Anspruch 1 gelöst. Die Spanneinrichtung weist mit ein Gehäuse und eine Druckhülse auf, die eine Zugspindel abschnittsweise umgreift und die relativ zu der Zugspindel in deren axialer Richtung verschiebbar ist, wobei die Zugspindel zumindest abschnittsweise mit einer Öffnung versehen ist, in der Mittel zum Verhindern einer Drehung der Druckhülse relativ zu der Zugspindel vorgesehen sind.

Nach einer Ausführungsform sind die zur Betätigung der Spanneinrichtung verwendeten Mittel zumindest teilweise in einem separaten, mit der Spanneinrichtung lösbar verbindbaren Adapter vorgesehen. Der Erfindung liegt dabei der Gedanke zugrunde, lediglich die für das Festklemmen der Bauteile unmittelbar erforderlichen Komponenten in der Spanneinrichtung vorzusehen, während die die unterschiedlichen Bewegungsabläufe bewirkenden Komponenten in einem separaten Adapterbauteil aufgenommen sein können. Die Spanneinrichtung wird auf diese Weise deutlich kompakter und leichter. Dies verbessert auch die Handhabbarkeit und weitere Bearbeitung der festgeklemmten Bauteile. Die Aufteilung der unterschiedlichen Funktionen in separate Bauteile ist auch unter wirtschaftlichen Aspekten vorteilhaft, da mit einem einzigen Adapter viele Spanneinrichtungen bearbeitet werden können und somit nicht in jeder Spanneinheit eigene Betätigungsmittel vorgesehen werden müssen.

Eine solche Spanneinrichtung weist ein Gehäuse, das eine stirnseitige Anlagefläche für ein festzuklemmendes Bauteil hat, ein in dem Gehäuse verschiebbar und drehbar aufgenommenes Mutterelement, das einen Innengewindeabschnitt sowie Angriffsmittel für ein erstes Werkzeug zur Einleitung eines Drehmoments in das Mutterelement aufweist, eine Zugspindel, die an einem Ende einen ersten Außengewindeabschnitt und an ihrem gegenüberliegenden Ende einen zweiten Außengewindeabschnitt aufweist, wobei einer der Außengewindeabschnitte mit dem Innengewindeabschnitt des Mutterelements in Eingriff steht, sowie eine Druckhülse auf, die die Zugspindel abschnittsweise umgreift und die relativ zu der Zugspindel in deren axialer Richtung verschiebbar ist. Erfindungsgemäß ist die Zugspindel der Spanneinrichtung zumindest abschnittsweise mit einer Öffnung versehen, in welcher Mittel zum Übertragen und/oder Bewirken einer Verschiebung der Druckhülse relativ zu der Zugspindel in deren axialer Richtung und/oder Mittel zum Verhindern einer Drehung der Druckhülse relativ zu der Zugspindel vorgesehen sind. Durch diese Verlagerung der Mittel, die die Relativbewegung zwischen der Druckhülse und der Zugspindel in axialer Richtung übertragen und/oder bewirken bzw. eine relative Drehung dieser Bauteile zueinander verhindern, in die Zugspindel wird die gesamte Spanneinrichtung deutlich kompakter und leichter.

In Weiterbildung dieses Erfindungsgedankens ist es vorgesehen, dass in dem mit dem Innengewindeabschnitt des Mutterelements in Eingriff stehenden Außengewindeabschnitt der Zugspindel eine axial verlaufende Öffnung vorgesehen ist, in welcher ein Druckbolzen verschiebbar aufgenommen ist, und dass in der Zugspindel wenigstens eine radial verlaufende Öffnung vorgesehen ist, die mit der axial verlaufenden Öffnung in Verbindung steht und in die ein Stift eingesetzt ist, der die Druckhülse mit dem Druckbolzen verbindet. Mit anderen Worten überträgt der Druckbolzen eine von einem separaten Bauteil aufgebrachte Verschiebebewegung zusammen mit dem Stift so auf die Druckhülse, dass die Relativbewegung zwischen der Druckhülse und der Zugspindel bewirkt wird. Der Stift, welcher den in der Zugspindel aufgenommenen Druckbolzen mit der Druckhülse verbindet, bewirkt gleichzeitig, dass sich die Druckhülse nicht relativ zu der Zugspindel verdrehen kann. Besonders bevorzugt sind diese Mittel zum Bewirken der relativen Verschiebung zwischen Druckhülse und Zugspindel sowie die Mittel zum Verhindern der relativen Drehung zwischen Druckhülse und Zugspindel symmetrisch ausgebildet, das heißt, der Stift erstreckt sich in einer Richtung senkrecht zu der Axialrichtung der Zugspindel durch die gesamte Dicke der Druckhülse und durch die gesamte Zugspindel.

Die axiale Führung der Druckhülse in der Zugspindel kann besonders einfach dadurch erreicht werden, dass die radial verlaufende Öffnung in der Zugspindel als ein Schlitz ausgebildet ist, dessen Länge in axialer Richtung den maximalen Verschiebeweg der Druckhülse relativ zu der Zugspindel begrenzt. Dieser Schlitz verhindert gleichzeitig auch die relative Drehung zwischen der Druckhülse und der Zugspindel. Die Länge des Schlitzes ist derart bemessen, dass zumindest ein definiertes Ausbeulen einer mit der Spanneinrichtung verbindbaren Hülse in einem ersten Betätigungsschritt der Spanneinrichtung so bewirkt wird, dass sich ein radialer Wulst an der Hülse ausbildet, der ein zu verklemmendes Bauteil hintergreift und erst in einem zweiten Betätigungsschritt die Hülse mit dem radialen Wulst gemeinsam mit der Druckhülse und der Zugspindel relativ zu den übrigen Komponenten der Spanneinrichtung bewegt wird, um die Bauteile festzuklemmen.

Die Druckhülse kann einen zwischen dem Mutterelement und der Zugspindel angeordneten Abschnitt aufweisen. Hierdurch wird ein besonders kompakter Aufbau der Spanneinrichtung möglich, da das Mutterelement, die Druckhülse und die Zugspindel zumindest abschnittsweise konzentrisch angeordnet sind. Eine in axialer Richtung der Zugspindel gesehen hintereinander liegende Anordnung von Druckhülse und Mutterelement, die zu einer großen Baulänge der Spanneinrichtung führt, lässt sich so umgehen.

In dem Gehäuse ist nach einer bevorzugten Ausführungsform ein elastisches Element, insbesondere ein Tellerfederpaket, aufgenommen, welches das Mutterelement in eine von der stimseitigen Anlagefläche wegweisende Richtung beaufschlagt. Dieses elastische Element ist damit so angeordnet, dass bei einer Betätigung der Spanneinrichtung während des Festklemmens eines Bauteils das Mutterelement gegen die Kraft des elastischen Elements in dem Gehäuse in Richtung der stimseitigen Anlagefläche gezogen wird. Wenn nun bei dem festzuklemmenden Bauteil Setzerscheinungen auftreten, können diese durch das elastische Element ausgeglichen werden, ohne dass die Klemmkraft einen beispielsweise vorgegebenen Wert unterschreitet. Dies ist insbesondere bei der Verwendung der erfindungsgemäßen Spanneinrichtung beim Verkleben von Sandwichstrukturen oder anderen mehrschichtigen Bauteilen von Vorteil, bei denen durch das Entweichen einer Dichtmasse oder eines Klebers zwischen den einzelnen Schichten mit Setzerscheinungen zu rechnen ist.

Weiter wird es bevorzugt, wenn das Gehäuse zweite Angriffsmittel für ein zweites Werkzeug aufweist. Dies kann beispielsweise eine Profilierung an dem der stirnseitigen Anlagefläche abgewandten Ende des Gehäuses sein. Grundsätzlich ist es jedoch auch möglich, dass das gesamte Gehäuse eine beispielsweise mehreckige Kontur zum Angriff eines zweiten Werkzeugs aufweist.

Zur Betätigung einer Spanneinrichtung der eingangs genannten Art ist erfindungsgemäß ein Adapter vorgesehen, der zur lösbaren Verbindung eines antreibenden Werkzeugs zum Erzeugen eines Drehmoments mit einer solchen Spanneinrichtung geeignet ist. Ein solcher erfindungsgemäßer Adapter weist als ein erstes Werkzeug erste Mittel zum Übertragen eines Drehmoments, als ein zweites Werkzeug zweite Mittel zum Abstützen eines Drehmoments sowie eine Einrichtung zum Bewirken einer axialen Relativbewegung zwischen einer Hülse und einem darin aufgenommenen Stift auf. Besonders bevorzugt ist der Adapter derart an eine Spanneinrichtung der oben genannten Art angepasst, dass die ersten Mittel zum Übertragen eines Drehmoments mit dem Mutterelement so zusammenwirken können, dass ein antreibendes Werkzeug ein Drehmoment über den Adapter in das Mutterelement leitet. Gleichzeitig wird durch die zweiten Mittel, die vorzugsweise an das Gehäuse der Spanneinrichtung angepasst sind, ein Verdrehen des Gehäuse verhindert. Somit wird eine Relativbewegung zwischen dem Mutterelement und dem Gehäuse in einer Spanneinrichtung bewirkt. Darüber hinaus ist eine Einrichtung vorgesehen, die die relative Bewegung zwischen der Zugspindel und der Druckhülse zum Ausbilden einer radialen Wulst in einer mit der Spanneinrichtung verbindbaren plastisch verformbaren Hülse bewirken kann.

Der erfindungsgemäße Adapter beinhaltet somit einige Komponenten beziehungsweise Funktionseinheiten, die bei der aus dem Stand der Technik bekannten Einrichtung in die Spanneinrichtung integriert sind. Auf diese Weise ist es möglich, die Spanneinrichtung gemäß der vorliegenden Erfindung kompakt und leicht auszubilden. Zudem ist die Spanneinrichtung vergleichsweise günstig herstellbar, da ein Teil der Funktionseinheiten, die nach dem Stand der Technik in der Spanneinrichtung selbst vorgesehen sind, in den für eine Vielzahl von Spanneinrichtungen verwendbaren Adapter integriert sind. Diese Aufteilung zwischen einer Spanneinrichtung und einem Adapter bringt somit auch unter wirtschaftlichen Gesichtspunkten erhebliche Vorteile mit sich. Die ersten Mittel und/oder die zweiten Mittel des Adapters können jeweils ein etwa hülsenartiges Element umfassen, welches eine innere Profilierung zum Übertragen beziehungsweise Abstützen eines Drehmoments aufweisen. Insbesondere können diese ersten und zweiten Mittel konzentrisch zueinander angeordnet sein. Dies ermöglicht es, dass der Adapter auf die Spanneinrichtung aufgesetzt wird und gleichzeitig die ersten Mittel mit dem Mutterelement und die zweiten Mittel mit dem Gehäuse zusammenwirken.

Die Einrichtung zum Bewirken einer axialen Relativbewegung zwischen einer Hülse und einem darin aufgenommenen Stift weisen vorzugsweise einen hülsenartigen Druckadapter sowie einen darin verschiebbar aufgenommenen Druckbolzen auf. Hierbei ist dem Druckadapter und dem Druckbolzen eine Mechanik zugeordnet, die so ausgebildet ist, dass bei einer axialen Bewegung des Druckadapters entlang eines Verschiebewegabschnitts durch die Mechanik eine Relativbewegung zwischen dem Druckadapter und dem Druckbolzen bewirkt wird. Die auf die Zugspindel und die Drückhülse übertragbare Relativbewegung wird also in dem Adapter mittels der Mechanik erzeugt.

Nach einer besonders bevorzugten Ausführungsform der Erfindung umfasst die Mechanik wenigstens eine Gleitschiene oder -fläche, wenigstens einen mit dieser zusammenwirkenden Gleitkeil sowie wenigstens einen dem Druckbolzen und/oder dem Druckadapter zugeordneten Schub- und/oder Stützkeil. Der Druckadapter kann dabei als eine Hülse ausgebildet sein, in welcher der Druckbolzen verschiebbar aufgenommen ist. In einem oder mehreren radialen Fenstern sind ein dem Druckbolzen zugeordneter Schubkeil sowie ein mit dem Druckadapter verbundener Stützkeil vorgesehen, wobei von radial außen ein oder mehrere Gleitkeile zwischen dem Schubkeil und dem Stützkeil vorgesehen sind. Wird nun der Druckadapter innerhalb des Adapters in axialer Richtung bewegt, so wird der wenigstens eine Gleitkeil durch eine Kontur der Gleitschiene oder -fläche radial nach innen gedrängt, wodurch der Schubkeil und der Stützkeil voneinander entfernt werden. Dies bewirkt eine Relativbewegung des Druckbolzens in dem Druckadapter. Alternativ hierzu ist es auch möglich, eine derartige Mechanik mittels Kugeln, beispielsweise wie in der EP 1 889 688 beschrieben, auszubilden.

Die Einrichtung zum Bewirken einer axialen Relativbewegung zwischen einer Hülse und einem darin aufgenommenen Stift kann weiter Mittel zum Abstützen eines Drehmoments aufweisen. Hierdurch ist es möglich, die Zugspindel und/oder die Druckhülse drehfest in dem Gehäuse der Spanneinrichtung zu halten, so dass die Drehbewegung des Mutterelements keine Rotation der Zugspindel, sondern lediglich eine axiale Relativbewegung zu dem Mutterelement bewirkt.

Nach einer weiteren bevorzugten Ausführungsform der Erfindung ist in dem Adapter ein Getriebe vorgesehen, das den ersten Mitteln zur Übertragung eines Drehmoments zugeordnet ist. Alternativ oder zusätzlich können Anschlussmittel zur Anbindung an das antreibende Werkzeug vorgesehen sein. Das Getriebe erlaubt die Verwendung einer herkömmlichen Antriebsquelle, beispielsweise eines pneumatisch oder elektrisch angetriebenen Schraubers, und gleichzeitig eine Anpassung an die idealen Einsatzbedingungen zum Festklemmen von Bauteilen mittels des Adapters bzw. einer Spanneinrichtung.

Die Erfindung betrifft weiter ein Verfahren zum Festklemmen plattenförmiger Bauteile zwischen einer Spanneinrichtung und einer plastisch verformbaren Hülse, wobei das Mutterelement, das Gehäuse und/oder die Zugspindel unter Verwendung eines Adapters mit einem antreibenden Werkzeug lösbar gekoppelt werden, so dass bei einer Betätigung des antreibenden Werkzeugs das Mutterelement und die Zugspindel sich relativ zueinander bewegen, wodurch in einem ersten Schritt die plastisch verformbare Hülse unter Ausbildung eines radialen Wulstes deformiert wird und danach in einem weiteren Schritt der radiale Wulst die plattenförmigen Bauteile gegen die stirnseitige Anlagefläche des Gehäuses der Spanneinrichtung presst.

Die Erfindung wird nachfolgend anhand eines Ausführungsbeispiels und unter Bezugnahme auf die Zeichnung näher erläutert. Es zeigen schematisch:
- Fig. 1: in Perspektivansicht einer erfindungsgemäße Spanneinrichtung,
- Fig. 2: in Längsschnitt die Spanneinrichtung nach Fig.1,
- Fig. 3: in Perspektivansicht einen erfindungsgemäßen Adapter,
- Fig. 4: in Längsschnitt den Adapter nach Fig. 3,
- Fig. 5: in einem zu Fig. 4 um 90° versetzten Längsschnitt den Adapter nach Fig.3,
- Fig. 6a - c: in Längsschnitten entsprechend Fig. 4 den Adapter nach Fig. 3 in verschiedenen Positionen,
- Fig. 7: in Längsschnitt eine plastisch verformte Hülse und
- Fig. 8: in Längsschnitt die Hülse nach Fig. 7 vor der Verformung.

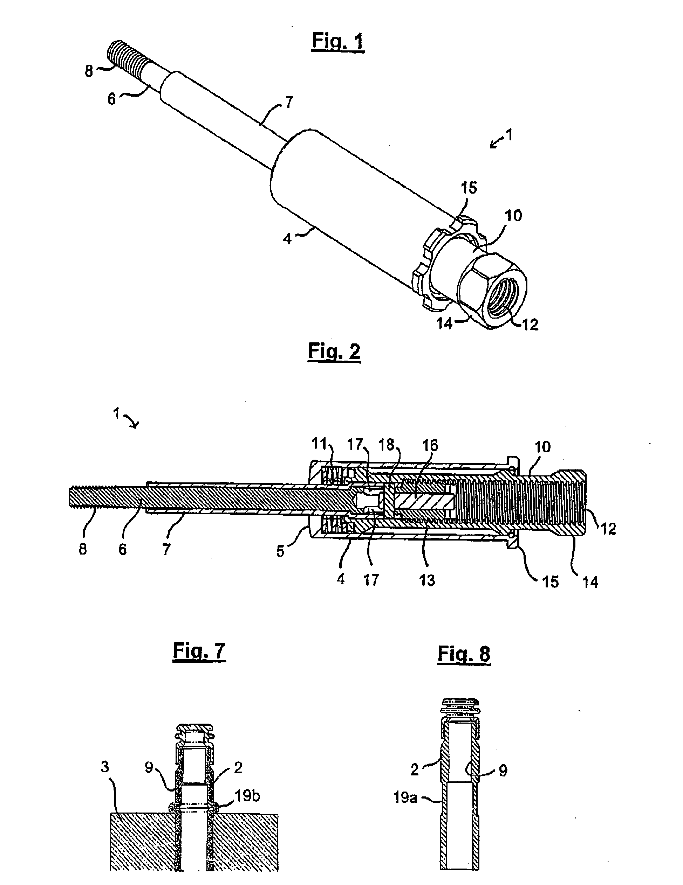

Die in den Fig. 1 und 2 dargestellte Spanneinrichtung 1 ist zur Verwendung mit einer in den Fig. 7 und 8 gezeigten plastisch verformbaren Hülse 2 zum Festklemmen wenigstens eines beispielsweise plattenartigen Bauteils 3 geeignet. Die Spanneinrichtung 1 weist ein im Wesentlichen topfartiges Gehäuse 4 auf, das eine stirnseitige Anlagefläche 5 hat, mit welcher das Gehäuse 4 gegen ein festzuklemmendes Bauteil angelegt werden kann. In der stimseitigen Anlagefläche 5 ist eine Öffnung ausgebildet, durch welche eine Zugspindel 6, die bereichsweise von einer Druckhülse 7 umgeben wird, aus dem Gehäuse 4 herausragt. Die Zugspindel 6 ist an ihrem in Fig. 2 linken Ende mit einem Außengewindeabschnitt 8 versehen, der zur Verbindung der Spanneinrichtung 1 mit der plastisch verformbaren Hülse 2 mit einem entsprechenden Innengewindeabschnitt 9 in der Hülse 2 in Eingriff gebracht werden kann. Der Außendurchmesser der plastisch verformbaren Hülse 2 entspricht dabei abschnittsweise dem Außendurchmesser der Druckhülse 7, so dass die Zugspindel mit der plastisch verformbaren Hülse 2 und der Druckhülse 7 durch eine Öffnung in dem festzuklemmenden Bauteil 3 hindurchgeführt werden kann.

In dem Gehäuse 4 der Spanneinrichtung 1 ist weiter ein Mutterelement 10 vorgesehen, welches innerhalb des Gehäuses 4 in axialer Richtung der Zugspindel 6 verschoben und relativ zu dem Gehäuse 4 verdreht werden kann. Zwischen der stirnseitigen Anlage 5 des Gehäuses 4 und der in Fig. 2 linken Stirnseite des Mutterelements 10 ist ein Tellerfederpaket 11 derart vorgesehen, dass das Mutterelement 10 in der Fig. 2 nach rechts gedrängt wird. Zwischen dem Tellerfederpaket 11 und dem Mutterelement 10 können eine Scheibe und eine Anlauf scheibe angeordnet sein. Das Mutterelement 10 ist hohl ausgebildet und weist in seinem in Fig. 2 rechten Abschnitt ein Innengewinde 12 auf, welches mit einem Außengewindeabschnitt 13 der Zugspindel 6 in Eingriff steht. Das Mutterelement 10 umgibt somit bereichsweise die Druckhülse 7 und die Zugspindel 6 konzentrisch. In dem dargestellten Ausführungsbeispiel ist das Mutterelement 10 über einen Sprengring an dem in Fig. 2 rechten Ende des Gehäuses 4 gegen ein Herausfallen aus dem Gehäuse gesichert.

Wie auch aus Fig. 1 ersichtlicht ist, ist das Mutterelement 10 an seinem aus dem Gehäuse 4 herausragenden Ende mit einem Außensechskant ausgebildet, welcher ein erstes Angriffsmittel 14 zur Einleitung eines Drehmoments in das Mutterelement bildet. Auch an dem in Fig. 2 rechten Ende des Gehäuses 4 ist eine Profilierung vorgesehen, die ein zweites Angriffsmittel 15 zum Abstützen eines Drehmoments bildet.

Der in Fig. 2 in dem Mutterelement 10 aufgenommene Abschnitt der Zugspindel 6 ist im Wesentlichen hohl ausgebildet, wobei in eine in der dargestellten Ausführungsform zylindrische Bohrung ein in axialer Richtung der Zugspindel 6 verlaufender Druckbolzen 16 eingesetzt ist. Dieser erstreckt sich bis in einen Bereich der Zugspindel 6, in weichem zwei radiale Schlitze 17 ausgebildet sind, die sich über eine definierte Strecke in axialer Richtung der Zugspindel 6 erstrecken. Wie in Fig. 2 gezeigt, ist der Druckbolzen 16 mit einer Querbohrung versehen, in weiche ein Zylinderstift 18 eingesetzt ist. Der Zylinderstift 18 ragt dabei durch die fensterartigen Schlitze 17 nach außen über die Zugspindel 6 hinaus und greift in Öffnungen in der Druckhülse 7 ein. Auf diese Weise verbindet der Zylinderstift 18 den Druckbolzen 16 mit der Druckhülse 7 derart, dass eine axiale Verschiebebewegung des Druckbolzens 16 innerhalb der Zugspindel 6 eine relative Verschiebebewegung zwischen der Druckhülse 7 und der Zugspindel 6 bewirkt. Gleichzeitig sind die Schlitze 17 in der Zugspindel 6 so bemessen, dass der Zylinderstift 18 eine Verdrehung der Druckhülse 7 relativ zu der Zugspindel 6 verhindert.

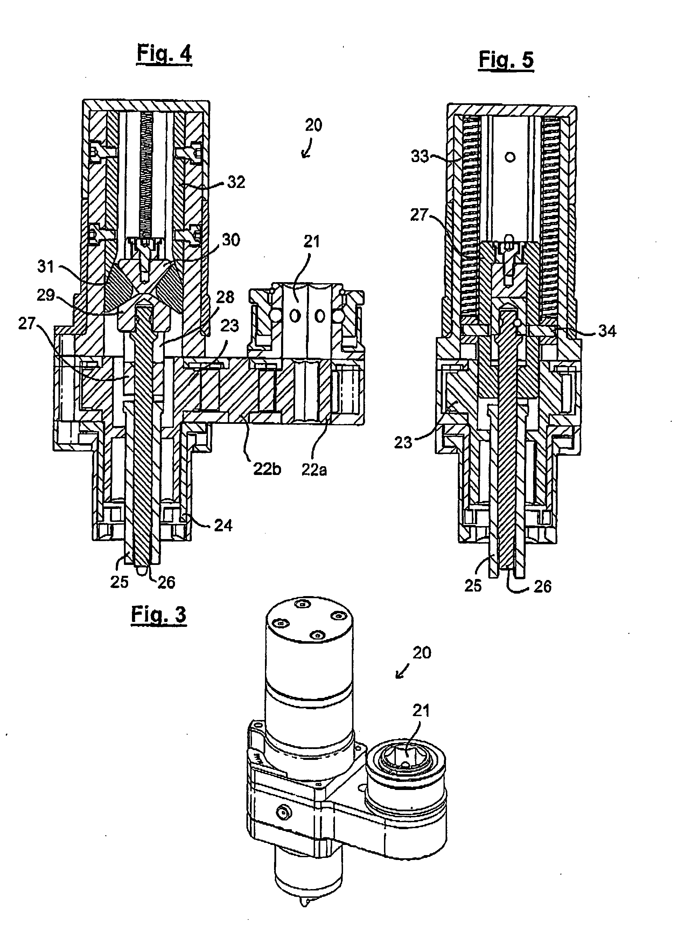

In ihrem in Fig. 8 gezeigten undeformierten Zustand liegt die Hülse 2 zunächst mit einer Stirnseite an der in Fig. 2 linken Stirnseite der Druckhülse 7 an. Die Hülse 2 ist dabei mit einem geschwächten Bereich 19a versehen, der ein definiertes Ausbeulen der Hülse 2 erleichtert, wenn zwischen dieser Stirnseite und dem Innengewindeabschnitt 9 ein Druck auf die Hülse ausgeübt wird. Wie unten unter Bezugnahme auf die Fig. 3 bis 6 näher erläutert wird, kann bei einer Drehung des Mutterelements 10 die Zugspindel 6 gegen ein Mitdrehen abgestützt werden, wodurch die Zugspindel 6 in dem Mutterelement 10 in Fig. 2 nach rechts bewegt wird. Eine ebenfalls nachfolgend beschriebene Mechanik kann in einem ersten Schritt der Betätigung bewirken, dass bei dieser Bewegung der Zugspindel 6 in dem Mutterelement 10 der Druckbolzen 16 und damit die Druckhülse 7 zunächst nicht in Fig. 2 nach rechts mitbewegt wird, sondern im Wesentlichen stehenbleibt. Hierdurch wird die Zugspindel 6 in die Druckhülse 7 hineingezogen. Dies bewirkt, dass die plastisch verformbare Hülse 2 durch das Verschieben der Zugspindel 6 relativ zu der Druckhülse 7 zunächst so verformt wird, dass sich in dem geschwächten Bereich 19a ein radialer Wulst 19b ausbildet. Anschließend können die Hülse 2, die Druckhülse 7 und die Zugspindel 6 gemeinsam in Fig. 2 nach rechts bewegt werden, wodurch sich der radiale Wulst 19b an das festzuklemmende Bauteil 3 anlegt.

In den Fig. 3 bis 6 ist ein Adapter 20 dargestellt, der zur Übertragung eines Drehmoments zwischen einem antreibenden Werkzeug (nicht gezeigt) und der zuvor beschriebenen Spanneinrichtung 1 eingesetzt werden kann. Der Adapter 20 weist hierzu eine Anschlussöffnung 21 zur Anbindung des antreibenden Werkzeugs auf. Über zwei miteinander kämmende Zahnräder 22a, 22b wird das Drehmoment des antreibenden Werkzeugs auf eine hülsenartige Antriebswelle 23 übertragen, die mit einer mit dem Zahnrad 22b kämmenden Außenverzahnung versehen ist. Die Antriebswelle 23 ist an ihrem in Fig. 4 unteren Ende so ausgebildet, dass sie die ersten Angriffsmittel 14 der Spanneinrichtung so umgreifen kann, dass ein Drehmoment auf das Mutterelement 10 übertragen werden kann. Die Antriebswelle 23 wird konzentrisch von einem Gehäusebereich 24 des Adapters 20 umgriffen, der zur Verbindung mit den zweiten Angriffsmitteln 15 an dem Gehäuse 4 der Spanneinrichtung ausgebildet ist. Das Gehäuse 4 der Spanneinrichtung wird somit drehfest an dem Adapter 20 gehalten.

In der Antriebswelle 23 sind konzentrisch mit dieser ein hülsenartiger Druckadapter 25 und ein in diesem verschiebbar geführter Druckbolzen 26 angeordnet. Der Druckbolzen 26 ist dabei so an die Größe des Druckbolzens 16 der Spanneinrichtung angepasst, dass der Druckbolzen 16 mittels des Druckbolzens 26 verschiebbar ist. Gleichzeitig ist der Druckadapter 25 an das in Fig. 2 rechte Ende der Zugspindel 6 angepasst, um diese abzustützen. Zudem können zwischen dem in Fig. 2 rechten Ende der Zugspindel 6 und dem in Fig. 4 stimseitigen unteren Ende des Druckadapters 25 miteinander in Eingriff bringbare Drehmomentübertragungsmittel vorgesehen sein, die durch die drehfeste Lagerung des Druckadapters 25 in dem Adapter 20 ein Verdrehen der Zugspindel 6 bei einer Betätigung des Mutterelements 10 verhindern.

Der Druckadapter 25 ist in seiner axialen Richtung verschiebbar in dem Adapter 20 aufgenommen. In Verlängerung des Druckadapters 25 ist ein Schlitten 27 in dem Adapter 20 vorgesehen, welcher den Druckbolzen 26 ebenfalls konzentrisch umschließt. In dem Schlitten 27 sind zwei radiale Fenster 28 ausgebildet, die es einem mit dem Druckbolzen 26 verbundenen Schubkeil 29 ermöglichen, sich bereichsweise aus dem Schlitten 27 heraus zu erstrecken. Dem Schubkeil 29 gegenüberliegend ist in dem Schlitten 27 ein Stützkeil 30 so vorgesehen, dass zwei radiale konkave Freiräume zwischen dem Schubkeil 29 und dem Stützkeil 30 entstehen, wenn diese gegeneinander anliegen (Fig. 4, 5 und 6a). Der Adapter 20 weist ferner zwei Gleitkeile 31 auf, die von außen in diese Freiräume eingesetzt sind. Dabei ist in dem Adapter 20 durch Gleitschienen 32 eine Innenkontur ausgebildet, die zunächst einen vergrößerten Querschnitt und in einem in Fig. 4 darüberliegenden Bereich einen verjüngten Querschnitt bildet.

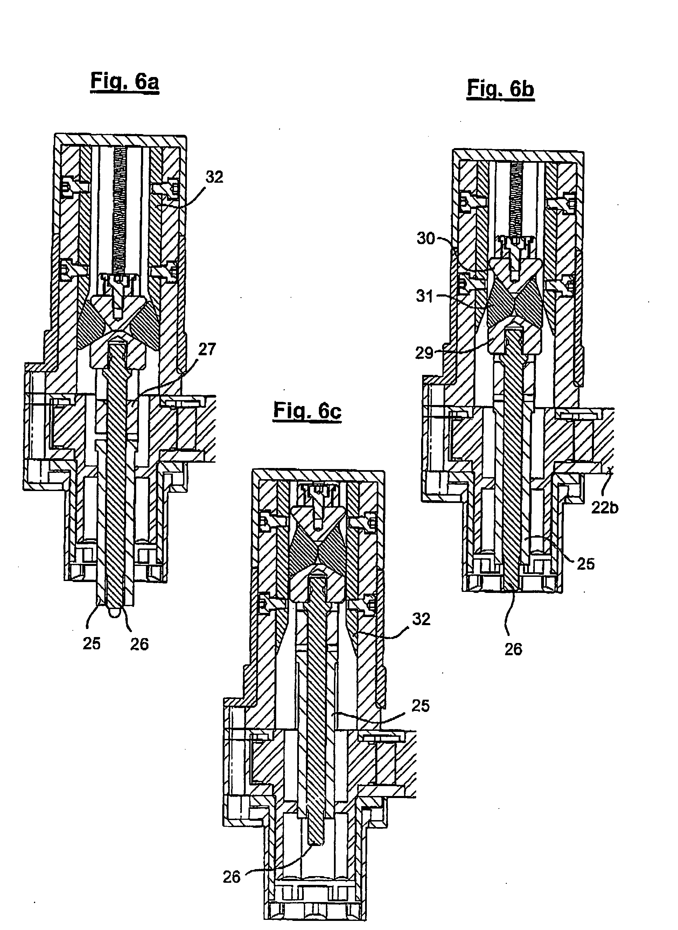

Dies bewirkt, dass bei einem Verschieben des Druckadapters 25 aus der in den Fig. 4 bis 6a gezeigten Position nach oben durch die Betätigung des Mutterelements 10 und damit eine Verschiebung der Zugspindel 6 zunächst der Druckadapter 25 gegen den Schlitten 27 anstößt und dann gemeinsam mit diesem in Fig. 4 nach oben verschoben wird. Hierdurch werden die Gleitkeile 31 wie in Fig. 6b gezeigt in den Freiraum zwischen dem Schubkeil 29 und dem Stützkeil 30 gedrängt, was eine Relativbewegung zwischen dem Druckbolzen 26 und dem Druckadapter 25 zur Folge hat. Mit anderen Worten wird der Druckbolzen 26 aus dem hülsenartigen Druckadapter 25 vorgeschoben, wenn der Druckadapter 25 in Fig. 6a nach oben bewegt wird. Hierdurch lässt sich die Druckhülse 7 relativ zu der Zugspindel 6 bewegen, um den radialen Wulst 19b in der plastisch verformbaren Hülse 2 auszubilden.

Der in den Fig. 6a bis 6c dargestellte Bewegungsablauf bewirkt, dass der Verformungsvorgang des geschwächten Bereichs 19a der Hülse 2 zu dem Wulst 19b mit einem vergleichsweise geringen Antriebsdrehmoment erfolgen kann. Hierdurch wird sichergestellt, dass bei der in Fig. 6b gezeigten Stellung des Adapters 20 der Wulst 19b vollständig ausgebildet ist und erst danach das eigentliche Festklemmen des Bauteils 3 erfolgt, wenn der Adapter weiter in die in Fig. 6c gezeigte Position bewegt wird.

Der Schlitten 27 wird dabei über in Fig. 5 gezeigte Federn 33 in Fig. 4 nach unten gedrückt, das heißt in seine Ausgangslage, in welcher der Schubkeil 29 an dem Stützkeil 30 anliegt. Zylinderstifte 34 übertragen die Federkräfte auf den Schlitten 27. Die Aufnahme des Drehmomentes, welches durch den Druckadapter 25 übertragen wird, erfolgt sowohl durch die Schlittengeometrie, als auch durch die Keile 29, 30 und 31.

### Bezugszeichenliste

- 1: Spanneinrichtung
- 2: Hülse
- 3: festzuklemmendes Bauteil
- 4: Gehäuse
- 5: Anlagefläche
- 6: Zugspindel
- 7: Druckhülse
- 8: Außengewindeabschnitt
- 9: Innengewindeabschnitt
- 10: Mutterelement
- 11: Tellerfederpaket
- 12: Innengewinde
- 13: Außengewinde
- 14: erstes Angriffsmittel
- 15: zweites Angriffsmittel
- 16: Druckbolzen
- 17: Schlitz
- 18: Zylinderstift

- 19a: geschwächter Bereich
- 19b: Wulst
- 20: Adapter
- 21: Anschlussöffnung
- 22a, b: Zahnrad
- 23: Antriebswelle
- 24: Gehäuseabschnitt
- 25: Druckadapter
- 26: Druckbolzen
- 27: Schlitten
- 28: Fenster
- 29: Schubkeil
- 30: Stützkeil
- 31: Gleitkeil
- 32: Gleitschiene
- 33: Feder
- 34: Stift

## Patentansprüche

1. Spanneinrichtung (1), insbesondere zur Verwendung in einer Befestigungsanordnung zum Festklemmen plattenförmiger Bauteile (3), mit einem Gehäuse (4), das eine stirnseitige Anlagefläche (5) für ein festzuklemmendes Bauteil (3) aufweist, einem in dem Gehäuse (4) verschiebbar und drehbar aufgenommenen Mutterelement (10), das einen Innengewindeabschnitt (12) sowie erste Angriffsmittel (14) für ein erstes Werkzeug (23) zur Einleitung eines Drehmoments in das Mutterelement (10) aufweist, einer Zugspindel (6), die an einem Ende einen ersten Außengewindeabschnitt (8) und an ihrem gegenüberliegenden Ende einen zweiten Außengewindeabschnitt (13) aufweist, wobei einer der Außengewindeabschnitte (13) mit dem Innengewindeabschnitt (12) des Mutterelements (10) in Eingriff steht, und mit einer Druckhülse (7), die die Zugspindel (6) abschnittsweise umgreift und die relativ zu der Zugspindel (6) in deren axialer Richtung verschiebbar ist, **dadurch gekennzeichnet, dass** die Zugspindel (6) zumindest abschnittsweise mit einer Öffnung versehen ist, in der Mittel (16, 18) zum Verhindern einer Drehung der Druckhülse (7) relativ zu der Zugspindel (6) vorgesehen sind.

2. Spanneinrichtung nach Anspruch 1, **dadurch gekennzeichnet, dass** in der Öffnung Mittel (16, 18) zum Übertragen und/oder Bewirken einer Verschiebung der Druckhülse (7) relativ zu der Zugspindel (6) in deren axialer Richtung vorgesehen sind.

3. Spanneinrichtung nach Anspruch 1 oder 2, **dadurch gekennzeichnet, dass** in dem mit dem Innengewindeabschnitt (12) des Mutterelements (10) in Eingriff stehenden Außengewindeabschnitt (13) der Zugspindel (6) eine axial verlaufende Öffnung vorgesehen ist, in welcher ein Druckbolzen (16) verschiebbar aufgenommen ist, und dass in der Zugspindel (6) wenigstens eine radial verlaufende Öffnung (17) vorgesehen ist, die mit der axial verlaufenden Öffnung in Verbindung steht, und in die ein Stift (18) eingesetzt ist, der die Druckhülse (7) mit dem Druckbolzen (16) verbindet.

4. Spanneinrichtung nach Anspruch 3, **dadurch gekennzeichnet, dass** die radial verlaufende Öffnung (17) als ein Schlitz ausgebildet ist, dessen Länge in axialer Richtung den maximalen axialen Verschiebeweg der Druckhülse (7) relativ zu der Zugspindel (6) begrenzt.

5. Spanneinrichtung nach einem der Ansprüche 1 bis 4, **dadurch gekennzeichnet, dass** die Druckhülse (7) einen zwischen dem Mutterelement (10) und der Zugspindel (6) angeordneten Abschnitt aufweist.

6. Spanneinrichtung nach einem der Ansprüche 1 bis 5, **dadurch gekennzeichnet, dass** in dem Gehäuse (4) ein elastisches Element (11) aufgenommen ist, welches das Mutterelement (10) in eine von der stirnseitigen Anlagefläche (5) wegweisende Richtung beaufschlagt.

7. Spanneinrichtung nach einem der Ansprüche 1 bis 6, **dadurch gekennzeichnet, dass** das Gehäuse (4) zweite Angriffsmittel (15) für ein zweites Werkzeug (24) aufweist.

8. Spanneinrichtung nach Anspruch 1, die zusammen mit wenigstens einer plastisch verformbaren Einweghülse (2), die einen definiert geschwächten Bereich zur Einleitung einer wulstartigen Verformung (19) bei einer Druckbelastung dieses Bereichs aufweist, und die eine mit der Einweghülse (2) verbindbare Zugspindel (6) und eine relativ zu dieser bewegbare Druckhülse (7) zum Abstützen der Einweghülse (2) aufweist, und mit Betätigungsmitteln zum Bewirken einer axialen Relativbewegung zwischen der Druckhülse (7) und der Zugspindel (6) in einem ersten Betätigungsschritt der Spanneinrichtung und einer gemeinsamen axialen Bewegung der Druckhülse (7) und der Zugspindel (6) in einem nachfolgenden zweiten Betätigungsschritt der Spanneinrichtung, eine Befestigungsanordnung zum Festklemmen plattenförmiger Bauteile bildet, wobei die Betätigungsmittel zumindest teilweise in einem separaten, mit der Spanneinrichtung (1) lösbar verbindbaren Adapter (20) vorgesehen sind.

9. Spanneinrichtung nach Anspruch 8, **dadurch gekennzeichnet, dass** der Adapter (20) zur lösbaren Verbindung eines antreibenden Werkzeugs zum Erzeugen eines Drehmoments mit der Spanneinrichtung (1) als ein erstes Werkzeug (23) erste Mittel zum Übertragen eines Drehmoments, als ein zweites Werkzeug (24) zweite Mittel zum Abstützen eines Drehmoments sowie eine Einrichtung (25 - 32) zum Bewirken einer axialen Relativbewegung zwischen einer Hülse (6) und einem darin aufgenommenen Stift (16) aufweist.

10. Spanneinrichtung nach Anspruch 9, **dadurch gekennzeichnet, dass** die ersten Mittel und/oder die zweiten Mittel ein etwa hülsenartiges Element (23, 24) umfassen, welches eine innere Profilierung zum Übertragen oder Abstützen eines Drehmoments aufweist.

11. Spanneinrichtung nach Anspruch 9 oder 10, **dadurch gekennzeichnet, dass** die ersten und zweiten Mittel (23, 24) konzentrisch zueinander angeordnet sind.

12. Spanneinrichtung nach einem der Ansprüche 9 bis 11, **dadurch gekennzeichnet, dass** die Einrichtung zum Bewirken einer axialen Relativbewegung zwischen einer Hülse (6) und einem darin aufgenommenen Stift (16) einen hülsenartigen Druckadapter (25) sowie einen darin verschiebbar aufgenommenen Druckbolzen (26) aufweist, wobei dem Druckadapter (25) und dem Druckbolzen (26) eine Mechanik (27 - 32) zugeordnet ist, die derart ausgebildet ist, dass bei einer axialen Bewegung des Druckadapters (25) zumindest entlang eines definierten Verschiebewegabschnitts durch die Mechanik (27 - 32) eine Relativbewegung zwischen dem Druckadapter (25) und dem Druckbolzen (26) bewirkt wird.

13. Spanneinrichtung nach Anspruch 12, **dadurch gekennzeichnet, dass** die Mechanik wenigstens eine Gleitschiene (32) oder -fläche, wenigstens einen mit dieser zusammenwirkenden Gleitkeil (31) sowie wenigstens einen dem Druckbolzen (26) und/oder dem Druckadapter (25) zugeordneten Schub- und/oder Stützkeil (29, 30) aufweist.

14. Spanneinrichtung nach einem der Ansprüche 9 bis 13, **dadurch gekennzeichnet, dass** die Einrichtung zum Bewirken einer axialen Relativbewegung zwischen einer Hülse und einem darin aufgenommenen Stift weitere Mittel zum Abstützen eines Drehmoments aufweisen.

15. Spanneinrichtung nach einem der Ansprüche 9 bis 14, **dadurch gekennzeichnet, dass** den ersten Mitteln zum Übertragen eines Drehmoments ein Getriebe (22a, 22b, 23) und/oder Anschlussmittel (21) zur Anbindung an das antreibende Werkzeug zugeordnet sind.

16. Verfahren zum Festklemmen plattenförmiger Bauteile (3) zwischen einer Spanneinrichtung (1) nach einem der Ansprüche 1 bis 15 und einer plastisch verformbaren Hülse (2), wobei das Mutterelement (10), das Gehäuse (4) und/oder die Zugspindel (6) unter Verwendung eines Adapters (20) einer Befestigungsanordnung mit einem antreibenden Werkzeug lösbar gekoppelt werden, so dass bei einer Betätigung des antreibenden Werkzeugs sich das Mutterelement (10) und die Zugspindel (6) relativ zueinander bewegen, wodurch in einem ersten Schritt die plastisch verformbare Hülse (2) unter Ausbildung eines radialen Wulstes (19) deformiert wird und danach in einem weiteren Schritt der radiale Wulst (19) die plattenförmigen Bauteile (3) gegen die stirnseitige Anlagefläche (5) des Gehäuses (4) der Spanneinrichtung (1) presst.

## Claims

1. A clamping device (1), in particular for use in a fastening arrangement for clamping plate-shaped components (3), comprising a housing (4) that has an end-face contact surface (5) for a component (3) to be clamped, a nut element (10) which is rotatably and displaceably accommodated in the housing (4) and which has an internal thread section (12) and first engagement means (14) for a first tool (23) for introducing a torque into the nut element (10), a feed rod (6) which on one end has a first external thread section (8) and at its opposite end has a second external thread section (13), wherein one of the external thread sections (13) is engaged with the internal thread section (12) of the nut element (10), and a pressure sleeve (7) which encloses the feed rod (6) in sections and which is displaceable relative to the feed rod (6) in the axial direction thereof, **characterized in that** the feed rod (6) is provided, at least in sections, with an opening in which means (16, 18) are provided for preventing rotation of the pressure sleeve (7) relative to the feed rod (6).

2. The clamping device according to claim 1, **characterized in that** means (16, 18) are provided for transmitting and/or effecting a displacement of the pressure sleeve (7) relative to the feed rod (6) in the axial direction thereof.

3. The clamping device according to claim 1 or 2, **characterized in that** in the external thread section (13) of the feed rod (6) that is engaged with the internal thread section (12) of the nut element (10) an axially extending opening is provided in which a pressure bolt (16) is displaceably accommodated, and that in the feed rod (6) at least one radially extending opening (17) is provided which is connected to the axially extending opening and into which a pin (18) is inserted which connects the pressure sleeve (7) to the pressure bolt (16).

4. The clamping device according to claim 3, **characterized in that** the radially extending opening (17) is formed as a slot whose length in the axial direction delimits the maximum axial displacement path of the pressure sleeve (7) relative to the feed rod (6).

5. The clamping device according to any one of the claims 1 to 4, **characterized in that** the pressure sleeve (7) has a section that is arranged between the nut element (10) and the feed rod (6).

6. The clamping device according to any one of the claims 1 to 5, **characterized in that** an elastic element (11) is accommodated in the housing (4) and acts on the nut element (10) in a direction facing away from the end-face contact surface (5).

7. The clamping device according to any one of the claims 1 to 6, **characterized in that** the housing (4) has second engagement means (15) for a second tool (24).

8. The clamping device according to claim 1, which together with at least one plastically deformable disposable sleeve (2) having a defined weakened area for introducing a bulge-like deformation (19) under a pressure load applied on this area, and with a feed rod (6) that can be connected to the disposable sleeve (2), and a pressure sleeve (7) for supporting the disposable sleeve (2), the pressure sleeve being movable relative to the feed rod, and with actuating means for effecting an axial relative movement between the pressure sleeve (7) and the feed rod (6) in a first actuating step of the clamping device, and for effecting a joint axial movement of the pressure sleeve (7) and the feed rod (6) in a subsequent second actuating step of the clamping device, forms a fastening arrangement for clamping plate-shaped components, wherein the actuating means are at least partially provided in a separate adapter (20) that can be detachably connected to the clamping device (1).

9. The clamping device according to claim 8, **characterized in that** the adapter (20) for detachably connecting a driving tool for generating a torque to the clamping device (1) has first means for transmitting a torque as a first tool (23), second means for supporting a torque as a second tool (24), and a device (25 - 32) for effecting an axial relative movement between a sleeve (6) and a pin (16) accommodated therein.

10. The clamping device according to claim 9, **characterized in that** the first means and/or the second means comprise an approximately sleeve-like element (23, 24) that has an internal profiling for transmitting or supporting a torque.

11. The clamping device according to claim 9 or claim 10, **characterized in that** the first and the second means (23, 24) are arranged concentrically to each other.

12. The clamping device according to any one of the claims 9 to 11, **characterized in that** the device for effecting an axial relative movement between a sleeve (6) and a pin (16) accommodated therein has a sleeve-like pressure adapter (25) and a pressure bolt (26) which is displaceably accommodated therein, wherein a mechanism (27 - 32) is associated with the pressure adapter (25) and the pressure bolt (26), which mechanism is adapted in such a manner that during an axial movement of the pressure adapter (25), at least along a defined displacement path section, a relative movement between the pressure adapter (25) and the pressure bolt (26) is effected by said mechanism (27 - 32).

13. The clamping device according to claim 12, **characterized in that** the mechanism has at least one slide rail (32) or sliding surface, at least one sliding wedge (31) interacting with the latter, and at least one thrust wedge and/or support wedge (29, 30) associated with the pressure bolt (26) and/or the pressure adapter (25).

14. The clamping device according to any one of the claims 9 to 13, **characterized in that** the device for effecting an axial relative movement between a sleeve and a pin accommodated therein has further means for supporting a torque.

15. The clamping device according to any one of the claims 9 to 14, **characterized in that** a gear unit (22a, 22b, 23) and/or connecting means (21) for connecting to the driving tool are associated with the first means for transmitting a torque.

16. A method for clamping plate-shaped components (3) between a clamping device (1) according to any one of the claims 1 to 15 and a plastically deformable sleeve (2), wherein the nut element (10), the housing (4) and/or the feed rod (6) are detachably coupled to a driving tool by using an adapter (20) of a fastening arrangement, so that upon actuation of the driving tool, the nut element (10) and the feed rod (6) move relative to each other, as a result of which, in a first step, the plastically deformable sleeve (2) is deformed while forming a radial bulge (19), and subsequently, in a further step, the radial bulge (19) presses the plate-shaped components (3) against the end-face contact surface (5) of the housing (4) of the clamping device (1).

## Revendications

1. Dispositif de serrage (1), notamment à utiliser dans un dispositif de fixation pour serrer des composants (3) en forme de plaque, comportant un logement (4), qui présente une surface d'immobilisation (5) frontale pour un composant (3) à serrer, un élément d'écran (10) renfermé de manière rotative et déplaçable dans un logement (4), qui présente une portion de filetage intérieur (12) ainsi qu'un premier moyen d'attaque (14) pour un premier outil (23) pour induire un couple de rotation dans l'élément d'écrou (10), un tirant (6), qui à une extrémité présente une première portion de filetage extérieur (8) et à son extrémité opposée présente une deuxième portion de filetage extérieur (13), dans lequel une des portions de filetage extérieur (13) vient en prise avec la portion de filetage intérieur (12) de l'élément d'écrou (10), et comportant un manchon de pression (7), qui vient en prise par portions autour du tirant (6) et qui est déplaçable par rapport au tirant (6) dans la direction axiale de celui-ci, **caractérisé en ce que** le tirant (6) est pourvu d'une ouverture au moins sur des portions, dans laquelle des moyens (16, 18) pour empêcher une rotation du manchon de pression (7) par rapport au tirant (6) sont prévus.

2. Dispositif de serrage selon la revendication 1, **caractérisé en ce que** dans l'ouverture des moyens (16, 18) pour transmettre et/ou provoquer un déplacement du manchon de pression (7) par rapport au tirant (6) dans la direction axiale de celui-ci sont prévus.

3. Dispositif de serrage selon la revendication 1 ou 2, **caractérisé en ce que** dans la portion de filetage extérieure (13) du tirant (6) en prise avec la portion de filetage intérieur (12) de l'élément d'écrou (10), une ouverture s'étendant axialement est prévue, dans laquelle un boulon de pression(16) est renfermé de manière déplaçable, et **en ce que** dans le tirant (6) au moins une ouverture (17) s'étendant radialement en prévue, qui est en liaison avec l'ouverture s'étendant axialement, et dans laquelle une goupille (18) est insérée, qui relie le manchon de pression (7) au boulon de pression (16).

4. Dispositif de serrage selon la revendication 3, **caractérisé en ce que** l'ouverture s'étendant radialement (17) est conçue comme une fente, dont la longueur dans la direction axiale délimite le trajet de déplacement axiale maximal du manchon de pression (7) par rapport au tirant (6).

5. Dispositif de serrage selon une des revendications 1 à 4, **caractérisé en ce que** le manchon de pression (7) présente une portion disposée entre l'élément d'écrou (10) et le tirant (6).

6. Dispositif de serrage selon une des revendications 1 à 5, **caractérisé en ce que** dans le logement (4) un élément élastique (11) est renfermé, qui sollicite l'élément d'écrou (10) dans une direction se détournant de la surface d'immobilisation (5) frontale.

7. Dispositif de serrage selon une des revendications 1 à 6, **caractérisé en ce que** le logement (4) présente un deuxième moyen d'attaque (15) pour un deuxième outil (24).

8. Dispositif de serrage selon la revendication 1, qui conjointement à au moins un manchon jetable (2) déformable plastiquement, qui présente une zone affaiblie définie pour induire une déformation (19) de type bourrelet en présence d'une sollicitation par pression de cette zone, et qui présente un tirant (6) reliable au manchon jetable (2) et un manchon de pression (7) mobile par rapport à celui-ci pour assister le manchon jetable (2), et comportant des moyens d'actionnement pour provoquer un mouvement relatif axial entre le manchon de pression (7) et le tirant (6) dans une première étape d'actionnement du dispositif de serrage et un mouvement axiale commun du manchon de pression (7) et du tirant (6) dans une deuxième étape d'actionnement consécutive du dispositif de serrage, forme un dispositif de fixation pour serrer des composants en forme de plaque, dans lequel les moyens d'actionnement sont prévus au moins partiellement dans un adaptateur (20) séparé, reliable de manière amovible au dispositif de serrage (1).

9. Dispositif de serrage selon la revendication 8, **caractérisé en ce que** l'adaptateur (20) en vue d'une liaison amovible d'un outil meneur afin de générer un couple de rotation avec le dispositif de serrage (1) comme premier outil (23) présente d'un premier moyen pour transmettre un couple de rotation, comme deuxième outil (24) un deuxième moyen pour assister un couple de rotation ainsi qu'un dispositif (25-32) pour provoquer un mouvement axiale relatif entre un manchon (6) et une goupille (16) renfermée dans celui-ci.

10. Dispositif de serrage selon la revendication 9, **caractérisé en ce que** le premier moyen et/ou le deuxième moyen comprennent un élément de type manchon (23, 24), qui présente un profilage intérieur pour transmettre ou assister un couple de rotation.

11. Dispositif de serrage selon les revendications 9 ou 10, **caractérisé en ce que** le premier et le deuxième moyen (23, 24) sont disposés concentriquement l'un par rapport à l'autre.

12. Dispositif de serrage selon une des revendications 9 à 11, **caractérisé en ce que** le dispositif pour provoquer un mouvement axiale relatif entre un manchon (6) et une goupille (16) renfermée dans celui-ci présente un adaptateur de pression (25) de type manchon ainsi qu'un boulon de pression (26) renfermé de manière déplaçable dans celui-ci, dans lequel un mécanisme (27-32) est coordonné à l'adaptateur de pression (25) et au boulon de pression (26), lequel est conçu de telle sorte qu'en présence d'un mouvement axiale de l'adaptateur de pression (25) au moins le long d'une portion de déplacement définie à travers le mécanisme (27-32), un mouvement relatif entre l'adaptateur de pression (25) et le boulon de pression (26) soit provoqué.

13. Dispositif de serrage selon la revendication 12, **caractérisé en ce que** le mécanisme présente au moins un rail coulissant (32) ou une surface coulissante, au moins une pièce coulissante (31) coopérant avec celle-ci ainsi qu'au moins une cale de poussée et/ou d'appui (29, 30) coordonnée au boulon de pression (26) et/ou à l'adaptateur de pression (25).

14. Dispositif de serrage selon une des revendications 9 à 13, **caractérisé en ce que** les dispositifs pour provoquer un mouvement axial relatif entre un manchon et une goupille renfermée dans celui-ci présentent d'autres moyens pour assister un couple de rotation.

15. Dispositif de serrage selon une des revendications 9 à 14, **caractérisé en ce que** les premiers moyens pour transmettre un couple de rotation sont coordonné à une transmission (22a, 22b, 23) et/ou à des moyens de raccordement (21) pour le montage sur l'outil meneur.

16. Procédé de serrage de composants (3) en forme de plaque entre un dispositif de serrage (1) selon une des revendications 1 à 15 et un manchon (2) déformable plastiquement, dans lequel l'élément d'écrou (10), le logement (4) et/ou le tirant (6) sont couplés de manière amovible en utilisant un adaptateur (20) d'un dispositif de fixation avec un outil meneur, de telle sorte que lors d'un actionnement de l'outil meneur, l'élément d'écrou (10) et le tirant (6) se déplacent l'un par rapport à l'autre, moyennant quoi dans une première étape le manchon (2) déformable plastiquement est déformé en formant un bourrelet radial (19) et ensuite dans une autre étape le bourrelet radial (19) presse les composants en forme de plaque (3) contre la surface d'immobilisation frontale (5) du logement (4) du dispositif de serrage (1).
